# EUROPÄISCHE PATENTANMELDUNG

(11) **EP 2 559 593 A1**
(43) Veröffentlichungstag der Anmeldung: **20.02.2013**
(21) Anmeldenummer: 12005709.6
(22) Anmeldetag: 06.08.2012
(51) Int. Cl.: B60Q 1/26, B60Q 1/04

(54) **Halterung zum Befestigen eines Frontblitzers und Frontblitzer**

(30) Priorität: 18.08.2011 DE 102011111110
(71) Anmelder: KAMEI automotive GmbH, 38448 Wolfsburg (DE)
(72) Erfinder: Schulze, Dirk, 29378 Wittingen (DE)
(74) Vertreter: Friedrich, Andreas

(57) **Zusammenfassung**

Die Erfindung betrifft eine Halterung (1) zum Befestigen eines Frontblitzers an einem Kühlergrill eines Kraftfahrzeugs, wobei die Halterung (1) wenigstens einen ersten Schenkel (8) und einen zweiten Schenkel (10) zum Einbringen zwischen zwei Rippen (2) des Kühlergrills aufweist, wobei wenigstens der erste Schenkel (8) einen ersten Vorsprung (12) aufweist und derart elastisch ausgebildet ist, dass der erste Vorsprung (12) nach dem Einbringen des ersten Schenkels (8) zwischen die beiden Rippen (2) hinter eine der Rippen (2) schnappt.

## Beschreibung

Die Erfindung betrifft eine Halterung zum Befestigen eines Frontblitzers an einem Kühlergrill eines Kraftfahrzeugs sowie einen Frontblitzer.

Frontblitzer werden heute an einer Vielzahl von Einsatzfahrzeugen unterschiedlichster Einsatzkräfte, wie beispielsweise Polizei, Feuerwehr oder Rettungsdienste, verwendet. Da Einsatzfahrzeuge, beispielsweise Feuerwehrfahrzeuge oder Rettungswagen, deutlich größer sind als herkömmliche Pkw, ist es möglich, dass ein Fahrer eines Kraftfahrzeuges auf dem Dach der Einsatzfahrzeuge angeordnete Lichtsignale, beispielsweise Blaulichter, aufgrund seiner relativ tiefen Sitzposition im Straßenverkehr nicht wahrnehmen kann. Dadurch kann es vorkommen, dass der Fahrer eines Kraftfahrzeuges ein herannahendes Einsatzfahrzeug nur spät oder sogar gar nicht bemerkt. Um dies zu verhindern, werden in der Regel Frontblitzer eingesetzt, die zumeist auf Höhe des Kühlergrills des Einsatzfahrzeuges befestigt sind und Lichtsignale in Fahrtrichtung des Einsatzfahrzeuges aussenden. Die Frontblitzer befinden sich daher besser im Sichtbereich eines Fahrers eines Kraftfahrzeuges als die auf dem Dach angeordneten Lichtanlagen. Sie können somit besser und schneller wahrgenommen werden, so dass der Fahrer vor einem herannahenden Einsatzfahrzeug besser gewarnt ist.

Gleiches gilt beispielsweise für den Fall, dass Einsatzfahrzeuge auf einer schlecht oder gar nicht beleuchteten Straße während des Einsatzes stehen und durch die Lichtsignalanlagen, insbesondere die Frontblitzer andere Verkehrsteilnehmer vor diesem unerwarteten Hindernis warnen. Auch in diesem Fall können Frontblitzer deutlich besser von Fahrern herkömmlicher Personenkraftwagen wahrgenommen werden, da sie sich direkt im Sichtfeld dieser Fahrer befinden.

Aus der DE 10 2004 013 775 A1 ist ein Kraftfahrzeug bekannt, das eine Leuchte oder Leuchteneinheit aufweist, die an einer Rippe befestigt ist, die in eine Kühlluftöffnung der Verkleidung des Kraftfahrzeugs hineinragt. Dabei bildet das Gehäuse der Leuchteneinheit eine Verlängerung der entsprechenden Rippe und wird bereits vom Hersteller des Kraftfahrzeugs am Kraftfahrzeug angeordnet.

Aus der DE 103 33 502 A1 ist ein Kraftfahrzeug bekannt, bei dem eine Frontbremsleuchte am Kühlergrill angeordnet wird. Neben den bereits beschriebenen Frontblitzern können folglich auch andere Leuchtenarten am Kühlergrill eines Kraftfahrzeugs angeordnet werden.

Aus der US 6,367,949 B1 ist bekannt, jegliche Art von Leuchten, beispielsweise Warn-, Blink- oder Positionsleuchten so auszubilden, dass sie an unterschiedlichen Stellen im Kraftfahrzeug angeordnet werden können. Derartige Leuchten können insbesondere auch am Kühlergrill des Kraftfahrzeugs positioniert werden.

Aus der DE 10 2006 017 780 A1 ist ein Abdeckteil für den äußeren Endbereich eines Kraftfahrzeugs bekannt, in das eine Leuchteneinheit inklusive eines Lichtleiters und einer Lichtaustrittsfläche integriert ist. Damit ist es auf elegante und einfache Art möglich, Leuchten in eine ansonsten unveränderte äußere Form des Kraftfahrzeugs zu integrieren.

Die DE 10 2007 033 170 A1 und die DE 91 12 853 U1 offenbaren jeweils Zusatzbremsleuchten, die als Ergänzung zu den ohnehin am Kraftfahrzeug vorgesehenen Bremsleuchten am Kraftfahrzeug montiert werden sollen. Diese werden jedoch naturgemäß im Heckbereich des Kraftfahrzeugs angeordnet.

Die DE 10 2007 018 678 A1 hingegen offenbart einen Kühlergrill für ein Kraftfahrzeug, bei dem einige senkrecht verlaufende Lamellen des Kühlergrills eine Leuchteinrichtung tragen oder selbst als Leuchteinrichtung ausgebildet sind.

Derartige Frontblitzer sind aus dem Stand der Technik hinreichend bekannt. Sie werden herkömmlicherweise am Kühlergrill des Kraftfahrzeugs befestigt. Dabei ist es teilweise nötig, den Kühlergrill auszubauen und gegebenenfalls sogar Teile aus ihm heraus zu sägen, um den Frontblitzer an der gewünschten Position einsetzen zu können. Dies ist nicht nur zeit- und kostenaufwändig, sondern senkt auch den Wiederverkaufswert der Fahrzeuge erheblich, da der Kühlergrill beschädigt wird. Zudem ist es nur für Fachpersonal und erheblichem Aufwand möglich, derartige Frontblitzer an Einsatzfahrzeugen zu befestigen.

Bei einer anderen Ausführungsform derartiger Befestigungsvorrichtungen für Frontblitzer wird die Haltevorrichtung zwischen Rippen des Kühlergrills des Einsatzfahrzeuges hindurch gesteckt und auf der dem Innenraum des Fahrzeugs zugewandten Seite des Kühlergrills verschraubt. Auch dazu muss ein Zugang zur Innenseite des Kühlergrills hergestellt werden. An dieser Stelle befindet sich zumeist der Motor. Daher ist die Innenseite zumeist nur schlecht oder gar nicht zugänglich, so dass auch diese Art der Befestigung zeit- und damit kostenintensiv und umständlich ist.

Insbesondere an Einsatzfahrzeugen von Polizei und Sicherheitsdiensten müssen die Frontblitzer zudem möglichst stabil befestigt werden. Derartige Fahrzeuge sind beispielsweise bei Demonstrationen oftmals direkter Gewalteinwirkung ausgesetzt. Um zu verhindern, dass die Frontblitzer einfach vom Kühlergrill des Kraftfahrzeuges abgeschlagen oder abgetreten werden können, muss eine besonders stabile und sichere Befestigung gewährleistet werden.

Der Erfindung liegt daher die Aufgabe zugrunde, eine Halterung zum Befestigen eines Frontblitzers an einem Kühlergrill eines Kraftfahrzeuges vorzuschlagen, die einfach und schnell handhabbar ist und dennoch eine ausreichende Stabilität und Sicherheit bietet.

Die Erfindung löst die gestellte Aufgabe durch eine Halterung zum Befestigen eines Frontblitzers an einem Kühlergrill eines Kraftfahrzeuges, wobei die Halterung wenigstens einen ersten Schenkel und einen zweiten Schenkel zum Einbringen zwischen zwei Rippen des Kühlergrills aufweist, wobei wenigstens der erste Schenkel wenigstens einen ersten Vorsprung aufweist und derart elastisch ausgebildet ist, dass der erste Vorsprung nach dem Einbringen des ersten Schenkels zwischen die beiden Rippen hinter eine der Rippen schnappt.

Eine erfindungsgemäße Halterung ist besonders einfach am Kühlergrill des Kraftfahrzeuges zu befestigen. Dazu muss lediglich die Halterung mit den beiden Schenkeln zwischen die Rippen des Kühlergrills geschoben werden. Nachdem die Halterung in den Kühlergrill beziehungsweise zwischen dessen Rippen eingeschoben wurde, schnappt der Vorsprung, der an dem wenigstens einen ersten Schenkel angeordnet ist, hinter eine der Rippen, und arretiert so die Halterung. Ein einfaches Herausziehen aus dem Kühlergrill ist auf diese Weise nicht mehr möglich. Es handelt sich dabei folglich um eine Art Clipverschluss, bei dem beispielsweise einer der Schenkel, beispielsweise der erste Schenkel, an dem sich der wenigstens eine erste Vorsprung befindet, beim Einschieben der Halterung zwischen die Rippen des Kühlergrills verformt wird, so dass er mechanisch gespannt ist. Erst wenn der wenigstens eine erste Vorsprung hinter eine der Rippen schnappt, entspannt sich der Schenkel wieder zumindest tielweise. Um die Halterung wieder vom Kühlergrill zu entfernen, muss nun lediglich das Einschnappen des ersten Vorsprungs hinter die Rippe des Kühlergrills rückgängig gemacht werden.

Bevorzugterweise sind der erste Schenkel und der zweite Schenkel ausgebildet, um jeweils zwischen zwei unterschiedliche Rippen des Kühlergrills eingebracht zu werden. Mit anderen Worten, wird zumindest eine der Rippen des Kühlergrills zwischen die beiden Schenkel eingeschoben. Aufgrund des an dem ersten Schenkel vorgesehenen Vorsprungs und der Elastizität wenigstens eines der Schenkel verformt sich auch in diesem Fall einer der Schenkel bis der erste Vorsprung, der an dem ersten Schenkel angeordnet ist, hinter eine der Rippen schnappt. Dabei ist es möglich, den ersten Schenkel oder den zweiten Schenkel oder beide Schenkel derart elastisch auszubilden, dass der betreffende Schenkel beim Einbau der Halterung verformt wird.

Vorteilhafterweise ist der erste Vorsprung einstückig mit dem ersten Schenkel ausgebildet. Auf diese Weise kann beispielsweise die gesamte Halterung oder zumindest der erste Schenkel mit dem sich daran befindenden ersten Vorsprung beispielsweise in Form eines Spritzgussteiles aus einem Kunststoff einstückig hergestellt werden. Dadurch wird die Anzahl der zu verwendenden Werkzeuge reduziert, wodurch auch die Herstellungskosten und der Herstellungsaufwand gesenkt werden. Alternativ dazu ist es auch möglich, an dem ersten Schenkel den ersten Vorsprung beispielsweise in Form eines Winkelelementes zu befestigen. Auf diese Weise ist es möglich, auf unterschiedliche Kühlergrillgeometrien verschiedener Fahrzeuge unterschiedlicher Hersteller einzugehen, ohne dass für jedes Fahrzeug eine separate Halterung für den Frontblitzer vorgesehen sein müsste. Es muss in diesem Fall lediglich der erste Vorsprung am ersten Schenkel in gegebenenfalls etwas anderer Position, Ausrichtung und Ausgestaltung angebracht werden. Natürlich können am ersten Schenkel auch mehrere Vorsprünge vorgesehen sein, die über eine Breite der Halterung verteilt sind. Hier ist es möglich, mehrere kleine Vorsprünge vorzusehen oder beispielsweise einen Vorsprung, der sich über die gesamte Breite der Halterung erstreckt. Insbesondere wenn mehrere Vorsprünge vorgesehen sind, die in Form von separaten Bauteilen am ersten Schenkel festgelegt werden, kann die Anzahl individuell je nach Anforderung im konkreten Nutzungsfall variiert werden.

Vorzugsweise erstreckt sich der erste Vorsprung des ersten Schenkels in Richtung auf den zweiten Schenkel. Damit ist eine kompakte Bauweise der Halterung erreichbar. Alternativ dazu kann natürlich auch der erste Vorsprung sich in der entgegengesetzten Richtung erstrecken. Durch die Richtung, in der sich der Vorsprung erstreckt, wird die Rippe festgelegt, hinter der der Vorsprung einschnappt, wenn die Halterung auf die Rippen des Kühlergrills gesteckt wird. In einer bevorzugten Ausführungsform weist auch der zweite Schenkel einen zweiten Vorsprung auf, der eingerichtet ist, nach dem Einbringen des ersten Schenkels und des zweiten Schenkels zwischen die Rippen des Kühlergrills hinter einer der Rippen zu schnappen. Dies kann die gleiche Rippe sein, hinter die auch der erste Vorsprung am ersten Schenkel schnappt. Alternativ dazu kann auch eine andere Rippe gewählt werden. Dadurch, dass an beiden Schenkeln jeweils mindestens ein Vorsprung vorgesehen ist, der hinter eine Rippe des Kühlergrills schnappt, wird die Stabilität der Halterung und insbesondere der Befestigung am Kühlergrill weiter erhöht. Insbesondere wird die Kraft erhöht, die benötigt wird, um die Halterung vom Kühlergrill einfach abzureißen, indem die an den Schenkeln vorgesehenen Vorsprünge von diesen abgebrochen werden. Dies ist insbesondere für Einsatzfahrzeuge von Sicherheitskräften wie beispielsweise der Polizei von Vorteil, wenn diese beispielsweise bei Demonstrationen, der Einwirkung von Gewalt ausgesetzt sind.

Sowohl für den Fall, dass der erste Schenkel und der zweite Schenkel der Halterung zwischen die gleichen Rippen des Kühlergrills geschoben werden, als auch für den Fall, dass sich wenigstens eine Rippe zwischen den beiden Schenkeln befindet, ist die Möglichkeit vorgesehen, dass am ersten Schenkel und am zweiten Schenkel wenigstens ein Vorsprung vorgesehen ist. Zumindest für den Fall, dass beide Schenkel zwischen das gleiche Rippenpaar des Kühlergrills geschoben werden, erstrecken sich die Vorsprünge vorzugsweise vom jeweils anderen Schenkel weg. Der am oberen Schenkel vorgesehene Vorsprung weist dabei folglich nach oben, während der am unteren Schenkel vorgesehene Vorsprung nach unten weist. Auf diese Weise können beide Vorsprünge an den beiden Schenkeln hinter die jeweils angrenzende Rippe schnappen und so die Halterung zum Befestigen des Frontblitzers an dem Kühlergrill befestigen.

Für den Fall, dass zwischen den beiden Schenkeln der Halterung wenigstens eine Rippe des Kühlergrills eingeführt werden soll, können sich die am ersten Schenkel und am zweiten Schenkel vorgesehenen Vorsprünge in die gleiche oder in entgegengesetzte Richtungen erstrecken. Hier ist lediglich darauf zu achten, dass die jeweiligen Vorsprünge an den beiden Schenkeln hinter die gewünschten Rippen schnappen und es so zu einer Verriegelung und Befestigung der Halterung am Kühlergrill des Kraftfahrzeuges kommt.

In einer bevorzugten Ausführungsform erstrecken sich der erste Vorsprung, der an dem ersten Schenkel vorgesehen ist, und der zweite Vorsprung, der am zweiten Schenkel vorgesehen ist, in unterschiedliche Richtungen. Wie bereits dargelegt, ist dies insbesondere für den Fall interessant, dass beide Schenkel zwischen die gleichen Rippen des Kühlergrills eingeführt werden. Doch auch für den Fall, dass sich im montierten Zustand zwischen den beiden Schenkeln der Halterung eine Rippe des Kühlergrills befindet, ist diese Ausgestaltung denkbar.

Bevorzugt weist die Halterung eine Platte zum Befestigen des Frontblitzers auf. So ist es beispielsweise möglich, diese Platte als Verbindungsplatte zwischen den beiden Schenkeln vorzusehen. Die Halterung hat dann eine im Querschnitt im Wesentlichen U-förmige Ausgestaltung. An der Platte der Halterung kann der Frontblitzer beispielsweise angeschraubt werden. Vorteilhafterweise umfasst die Platte ein Lochbild zum Durchführen von Kabeln und Befestigungselementen. Dabei können in dem Lochbild Löcher an unterschiedlichen Positionen vorgesehen sein, um beispielsweise an ein und derselben Halterung Frontblitzer unterschiedlicher Hersteller oder für unterschiedliche Fahrzeugtypen befestigen zu können. Da unterschiedliche Hersteller beispielsweise die Kabelzuführung und die Lage von Befestigungselementen wie beispielsweise Schrauben an unterschiedlichen Positionen vorsehen können, ist es auf diese Weise möglich, unabhängig vom Hersteller des Frontblitzers die gleiche Halterung zu verwenden. Die Halterung muss dann lediglich auf den verwendeten Fahrzeugtyp angepasst werden.

Ein erfindungsgemäßer Frontblitzer umfasst eine oben beschriebene Halterung. Damit kann der Frontblitzer einfach, schnell und kostengünstig am Kühlergrill eines Kraftfahrzeugs befestigt werden. Zudem ist es möglich, den Frontblitzer genau so einfach vom Kühlergrill zu entfernen, wobei der Kühlergrill nicht beschädigt und somit der Wiederverkaufswert des Kraftfahrzeugs nicht reduziert wird. Die beschriebenen Halterungen sorgen dafür, dass ein an der Halterung befestigter Frontblitzer den richtigen Winkel und die richtige Ausrichtung bekommt, die für die Aussendung von Licht vom Einsatzfahrzeug nötig ist. Auf diese Weise muss eine weitere Einstellmöglichkeit nicht vorgesehen werden. Natürlich ist es möglich, derartige Einstellmöglichkeiten zu integrieren, um für den Kunden die größtmögliche Flexibilität zu erreichen.

Mit Hilfe einer Zeichnung wird nachfolgend ein Ausführungsbeispiel der vorliegenden Erfindung näher erläutert. Es zeigt:
- Figur 1 -: die schematische Ansicht einer auf Rippen eines Kühlergrills gesteckten Halterung gemäß einem ersten Ausführungsbeispiel der vorliegenden Erfindung,
- Figur 2 -: die Halterung aus Fig. 1 in einer Frontalansicht,
- Figur 3 -: eine Schnittdarstellung entlang der Linie III-III aus Figur 2,
- Figur 4 -: die Situation aus den Figuren 1 und 2 in einer Seitenansicht,
- Figur 5 -: eine schematische Ansicht einer auf Rippen eines Kühlergrills gesteckten Halterung gemäß einem zweiten Ausführungsbeispiel der vorliegenden Erfindung,
- Figur 6 -: die aufgesteckte Halterung aus Figur 5 in einer Frontalansicht,
- Figur 7 -: ein Schnitt durch Figur 6 entlang der Linie VII-VII, und
- Figur 8 -: die Situation aus Figuren 5 und 6 in einer Seitenansicht.

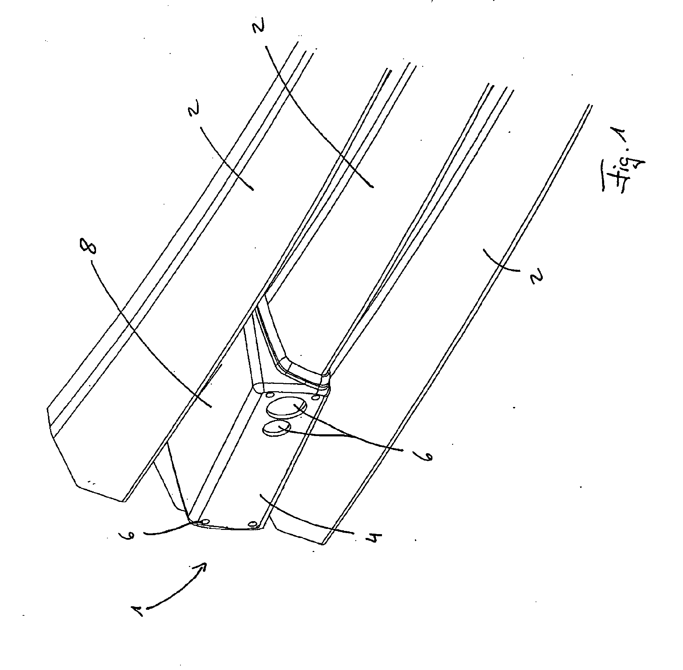

Figur 1 zeigt eine Halterung 1, die an einem Kühlergrill befestigt ist. Von diesem sind drei Rippen 2 teilweise dargestellt. Die Halterung 1 umfasst eine Platte 4, an der ein Frontblitzer angeordnet werden kann. Die Platte 4 umfasst dabei ein Lochmuster 6, das im in Figur 1 dargestellten Ausführungsbeispiel vier in den Ecken der Platte 4 befindliche kleine Löcher sowie zwei große Löcher umfasst. Die kleinen Löcher sind vorgesehen, um beispielsweise Befestigungselemente aufzunehmen, mit denen ein Frontblitzer an der Platte 4 der Halterung 1 befestigt wird. Die beiden im rechten Bereich der Platte 4 vorgesehenen großen Ausnehmungen sind für Kabelzuführungen vorgesehen, die ein an der Platte 4 angeordneter Frontblitzer benötigt.

Die in Figur 1 gezeigte Halterung 1 verfügt zudem über einen ersten Schenkel 8, der zwischen den oberen beiden gezeigten Rippen 2 des Kühlergrills angeordnet ist. Nicht gezeigt ist ein zweiter Schenkel 10, der zwischen den unteren beiden Rippen des Kühlergrills angeordnet ist.

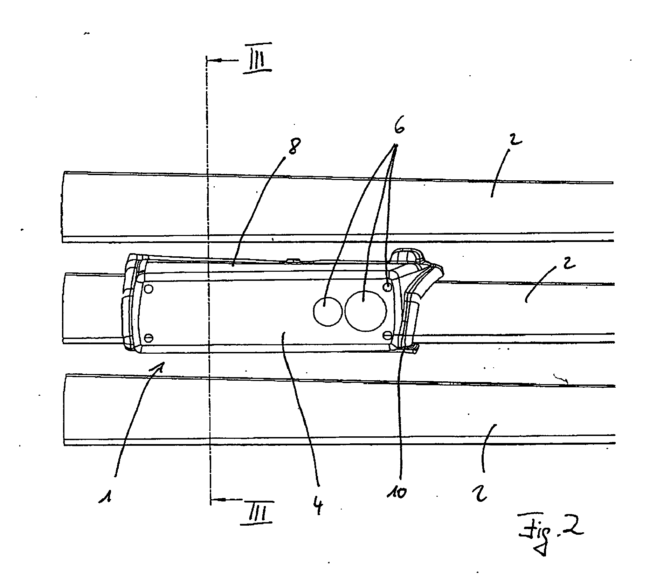

Figur 2 zeigt die Situation aus Figur 1 in einer Frontalansicht. Man erkennt wieder drei Rippen 2 eines Kühlergrills, wobei auf die zweite Rippe 2 die Halterung 1 gesteckt ist. Die Platte 4 der Halterung 1 verfügt wieder über das bereits in Figur 1 gezeigte Lochmuster 6. Man erkennt zudem, dass der erste Schenkel 8 zwischen den oberen beiden Rippen 2 angeordnet ist, während der zweite Schenkel 10 zwischen den unteren beiden Rippen 2 angeordnet ist. Natürlich zeigt Figur 2 wie auch Figur 1 nur einen Ausschnitt aus einem gesamten Kühlergrill, so dass der Frontblitzer auch auf jeder anderen Rippe 2 angeordnet werden kann.

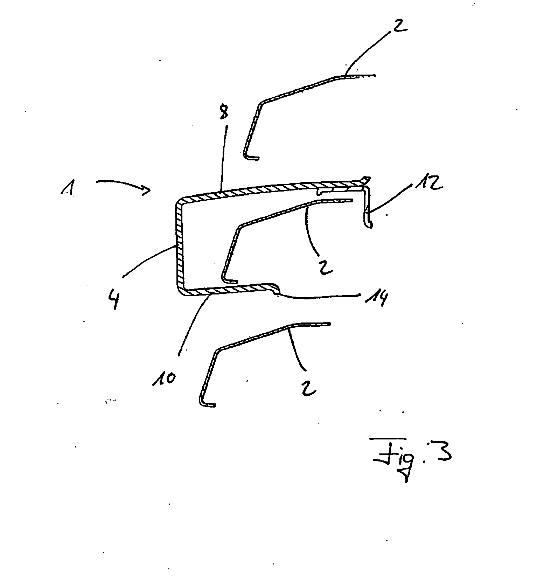

Figur 3 zeigt eine Schnittdarstellung entlang der Linie III-III aus Figur 2. Man erkennt wieder die drei Rippen 2 eines Kühlergrills. Die Halterung 1 verfügt wieder über die Platte 4 sowie einen ersten Schenkel 8 und einen zweiten Schenkel 10. Am in Figur 3 rechten Ende des ersten Schenkels 8 ist ein erster Vorsprung 12 gezeigt.

Im in Figur 3 gezeigten Zustand ist die Halterung 1 in ihrer Ausgangs- und Ruheposition. Die beiden Schenkel 8, 10 sind also entspannt. Beim Aufschieben der Halterung 1 auf die mittlere der drei gezeigten Rippen 2 müssen sich die beiden Schenkel 8, 10 aufweiten, um überhaupt über die mittlere gezeigte Rippe 2 geschoben werden zu können. Dabei fährt der erste Vorsprung 12 an der Rippe 2 entlang und biegt so den ersten Schenkel 8 und den zweiten Schenkel 10 auseinander. Erst nachdem die Halterung 1 vollständig auf die Rippe 2 aufgeschoben wurde, schnappt der erste Vorsprung 12 in die in Figur 3 gezeigte Position hinter die mittlere Rippe 2. Dadurch ist die Halterung 1 am Kühlergrill bzw. den Rippen 2 befestigt. Die Halterung 1 kann nicht einfach in Figur 3 nach links vom Kühlergrill bzw. den Rippen 2 abgezogen werden. Damit ist die Halterung 1 befestigt und gesichert. Eine Verschraubung oder sonstige Befestigung der Schenkel 8, 10 oder des Vorsprungs 12 ist nicht notwendig.

Man erkennt in Figur 3, dass der erste Vorsprung 12 als separates Bauteil am ersten Schenkel 8 angeordnet ist. Natürlich kann der erste Vorsprung 12 auch einstückig mit dem ersten Schenkel 8 ausgebildet sein.

Am in Figur 3 rechten Ende des zweiten Schenkels 10 befindet sich eine Krempe 14. Diese dient dazu, die Halterung 1 einfacher über die Rippe 2 schieben zu können. Man erkennt, dass der erste Schenkel 8 zwischen den oberen beiden Rippen 2 und der zweite Schenkel 10 zwischen den unteren beiden Rippen 2 angeordnet ist.

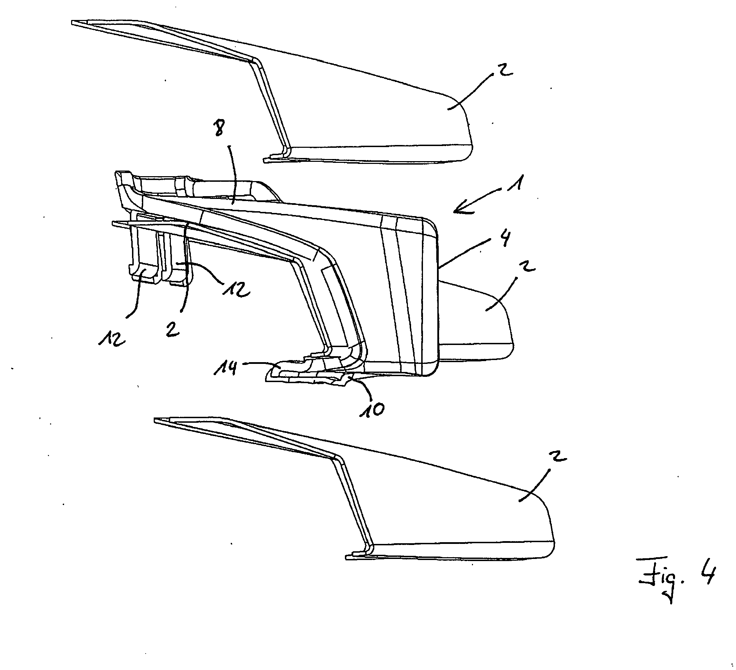

Figur 4 zeigt die Situation aus den Figuren 1 und 2 in einer Seitenansicht. Die Rippen 2 des Kühlergrills sind gebogen ausgestaltet, so dass sie in Figur 4 nach rechts hervorstehen. Auf der mittleren Rippe 2 ist wieder die Halterung 1 mit ihrer Platte 4 gezeigt, von der sich der erste Schenkel 8 und der zweite Schenkel 10 in Figur 4 nach links erstrecken. Am ersten Schenkel 8 ist der erste Vorsprung 12 zu erkennen, der in Figur 4 aus zwei einzelnen Vorsprüngen besteht, die nebeneinander angeordnet sind. Dadurch kann die Stabilität der Befestigung der Halterung 1 an der Rippe 2 bzw. am Kühlergrill noch verstärkt werden. Am zweiten Schenkel 10, der sich auch in Figur 4 wieder zwischen den beiden unteren Rippen 2 befindet, ist am linken Rand wieder die Krempe 14 zu erkennen, durch die das Aufstecken auf den Kühlergrill vereinfacht wird.

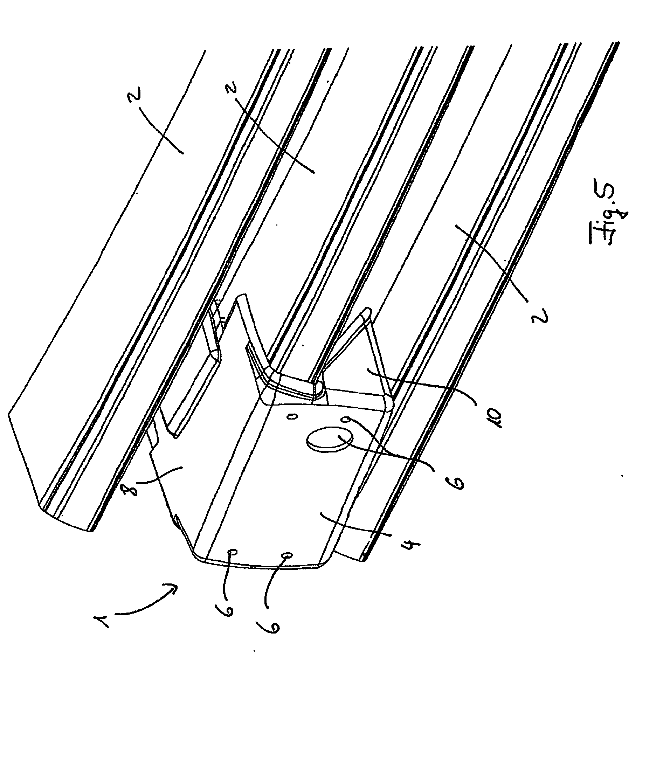

Figur 5 zeigt eine schematische Ansicht einer auf einen Kühlergrill aufgesteckten Halterung 1 gemäß einem zweiten Ausführungsbeispiel der vorliegenden Erfindung. Auch in Figur 5 sind drei Rippen 2 gezeigt, die Teil eines Kühlergrills sind. Die aufgesteckte Halterung 1 verfügt auch hier über eine Platte 4, an der ein nicht gezeigter Frontblitzer befestigt werden kann. Dazu ist an der Platte 4 ein Lochmuster 6 vorgesehen, das über Löcher verfügt, die zur Aufnahme von Befestigungselementen vorgesehen sind und im in Figur 5 gezeigten Ausführungsbeispiel ein Loch aufweist, durch das Kabel zum Frontblitzer geführt werden können. Man erkennt einen ersten Schenkel 8, der zwischen den oberen beiden Rippen 2 angeordnet ist, während sich ein zweiter Schenkel 10 zwischen den unteren beiden in Figur 5 gezeigten Rippen erstreckt.

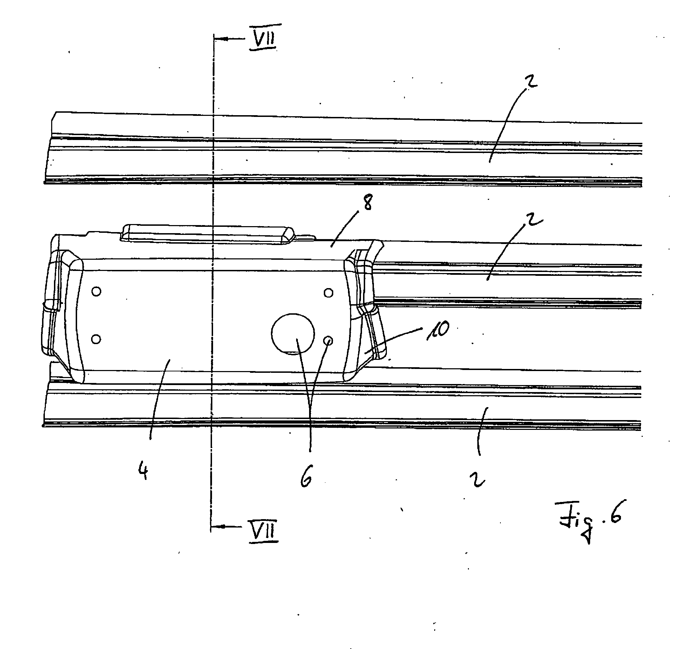

Figur 6 zeigt die Situation aus Figur 5 in einer Frontalansicht. Der zweite Schenkel 10 liegt nun an der unteren Rippe 2 an, während der erste Schenkel 8 an der mittleren gezeigten Rippe 2 anliegt.

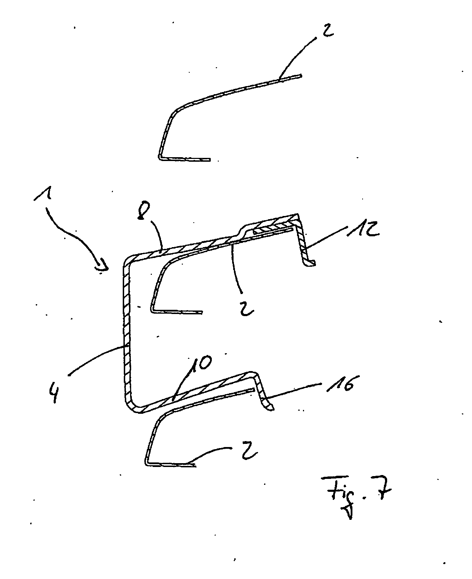

Figur 7 zeigt eine Schnittdarstellung entlang der Linie VII-VII aus Figur 6. Die Halterung 1 verfügt über eine Platte 4 und einen ersten Schenkel 8 sowie einen zweiten Schenkel 10. Der erste Schenkel 8 liegt wie im in den Figuren 1 bis 4 gezeigten Ausführungsbeispiel an der Oberseite der mittleren gezeigten Rippe 2 an. Am in Figur 7 rechten Ende des ersten Schenkels 8 befindet sich der erste Vorsprung 12, der im gezeigten Ausführungsbeispiel wieder als separates Bauteil am ersten Schenkel 8 angeordnet ist. Anders als in dem in den Figuren 1 bis 4 gezeigten Ausführungsbeispiel liegt im hier gezeigten Ausführungsbeispiel jedoch der zweite Schenkel 10 an der unteren gezeigten Rippe 2 an. Am rechten Ende des zweiten Schenkels 10 befindet sich ein zweiter Vorsprung 16. Figur 7 zeigt die Situation, in der die Halterung zum Befestigen des Frontblitzers bereits am Kühlergrill bzw. den Rippen 2 des Kühlergrills befestigt ist. Man erkennt, dass sowohl der erste Vorsprung 12 am ersten Schenkel 8 als auch der zweite Vorsprung 16 am zweiten Schenkel 10 hinter die jeweilige Rippe 2 geschnappt ist. Auf diese Weise ist ein Abziehen der Halterung 1 nach links nicht möglich, so dass die Halterung 1 am Kühlergrill befestigt und fixiert ist. Auch hier geschieht das Anordnen der Halterung 1 durch einfaches Aufstecken. Die beiden Schenkel 8, 10 weiten auf, bis die jeweiligen Vorsprünge 12, 16 hinter die ihnen zugeordnete Rippe 2 schnappen können. In diesem Fall entspannen die Schenkel 8, 10 so weit es die Rippen 2 zulassen. Je nach Ausführungsform kann vorgesehen sein, dass selbst im in Figur 7 gezeigten montierten Zustand eine Vorspannung in den Schenkeln 8, 10 vorliegt, so dass die jeweiligen Schenkel 8, 10 an den ihnen zugeordneten Rippen 2 mit einer Kraft beaufschlagt anliegen. Auf diese Weise kann die zum Entfernen der Halterung 1 vom Kühlergrill notwendige Kraft eingestellt und insbesondere erhöht werden.

Natürlich ist es auch denkbar, beispielsweise eine Halterung 1 zu verwenden, bei der sowohl der erste Schenkel 8 als auch der zweite Schenkel 10 zwischen die identischen Rippen zwei, beispielsweise die oberen beiden Rippen eingeführt wird. In diesem Fall könne an beiden Schenkel 8, 10 ein erster Vorsprung 12 und einer zweiter Vorsprung 16 vorgesehen sein, die sich dann jedoch in entgegengesetzte Richtungen erstrecken. So erstreckt sich der erste Vorsprung 12 am ersten Schenkel 8 beispielsweise nach oben, während sich der zweite Vorsprung 12 am zweiten Schenkel 10 nach unten erstreckt. Beim Einführen einer derartigen Halterung 1 zwischen zwei Rippen 2 eines Kühlergrills werden die beiden Schenkel 8, 10 zusammengedrückt, bis die Vorsprünge 12, 16 hinter die ihnen zugeordneten Rippen 2 schnappen können. Auch auf diese Weise wird eine einfache Positionierung und Befestigung der Halterung 1 an den Rippen 2 eines Kühlergrills erreicht und gewährleistet, dass eine einfache zerstörungsfreie Entfernung der Halterung 1 vom Kühlergrill nicht möglich ist.

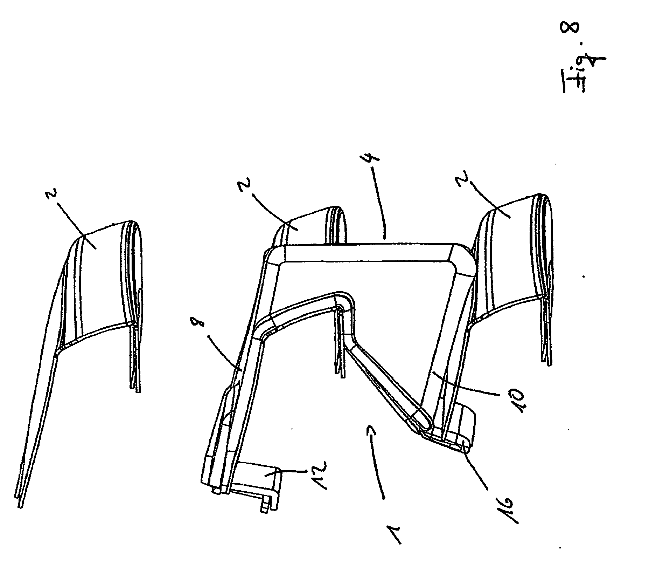

Figur 8 zeigt die Situation aus den Figuren 5 und 6 in einer Seitenansicht. Man erkennt wieder die Halterung 1, deren erster Vorsprung 12, der sich am ersten Schenkel 8 befindet, hinter die mittlere der gezeigten Rippen 2 geschnappt ist, während der zweite Vorsprung 16, der sich am zweiten Schenkel 10 befindet, hinter die untere der gezeigten Rippen 2 geschnappt ist. Sowohl für den ersten Vorsprung 12 als auch für den zweiten Vorsprung 16 gilt, dass sie entweder einstückig mit dem jeweiligen Schenkel 8, 10 ausgebildet sein können oder als separates Bauteil an diesem festgelegt werden. Gleichzeitig ist es möglich, mehrere über die Breite der Halterung 1 nebeneinander angeordnete Vorsprünge vorzusehen, um die Stabilität der Befestigung der Halterung 1 am Kühlergrill noch zu erhöhen. Alternativ dazu kann auch ein sehr breiter Vorsprung 12, 16 vorgesehen sein, wodurch ebenfalls die Stabilität und Sicherheit der Befestigung der Halterung 1 am Kühlergrill erhöht wird.

### Bezugszeichenliste

- 1: Halterung
- 2: Rippe
- 4: Platte
- 6: Lochmuster
- 8: Erster Schenkel
- 10: Zweiter Schenkel
- 12: Erster Vorsprung
- 14: Krempe
- 16: Zweiter Vorsprung

## Patentansprüche

1. Halterung (1) zum Befestigen eines Frontblitzers an einem Kühlergrill eines Kraftfahrzeugs, wobei die Halterung (1) wenigstens einen ersten Schenkel (8) und einen zweiten Schenkel (10) zum Einbringen zwischen zwei Rippen (2) des Kühlergrills aufweist, wobei wenigstens der erste Schenkel (8) einen ersten Vorsprung (12) aufweist und derart elastisch ausgebildet ist, dass der erste Vorsprung (12) nach dem Einbringen des ersten Schenkels (8) zwischen die beiden Rippen (2) hinter eine der Rippen (2) schnappt.

2. Halterung (1) nach Anspruch 1, **dadurch gekennzeichnet, dass** der erste Schenkel (8) und der zweite Schenkel (10) ausgebildet sind, um jeweils zwischen zwei unterschiedliche Rippen (2) des Kühlergrills eingebracht zu werden.

3. Halterung (1) nach Anspruch 1 oder 2, **dadurch gekennzeichnet, dass** der erste Vorsprung (12) einstückig mit dem ersten Schenkel (8) ausgebildet ist.

4. Halterung (1) nach einem der vorstehenden Ansprüche, **dadurch gekennzeichnet, dass** der erste Vorsprung (12) des ersten Schenkels (8) sich in Richtung auf den zweiten Schenkel (10) erstreckt.

5. Halterung (1) nach einem der vorstehenden Ansprüche, **dadurch gekennzeichnet, dass** der zweite Schenkel (10) einen zweiten Vorsprung (16) aufweist, der eingerichtet ist, nach dem Einbringen des ersten Schenkels (8) und des zweiten Schenkels (10) zwischen die Rippen (2) des Kühlergrills hinter eine der Rippen (2) zu schnappen.

6. Halterung (1) nach Anspruch 5, **dadurch gekennzeichnet, dass** der erste Vorsprung (12) und der zweite Vorsprung (16) sich in unterschiedliche Richtungen erstrecken.

7. Halterung (1) nach einem der vorstehenden Ansprüche, **dadurch gekennzeichnet, dass** die Halterung (1) eine Platte (4) zum Befestigen des Frontblitzers aufweist.

8. Halterung (1) nach Anspruch 7, **dadurch gekennzeichnet, dass** die Platte (4) ein Lochbild (6) zum Durchführen von Kabeln und Befestigungselementen aufweist.

9. Frontblitzer mit einer Halterung (1) nach einem der vorstehenden Ansprüche.
